Europäisches Patentamt

European Patent Office

Office européen des brevets

(11) Publication number: **0 353 864**
**A2**

# EUROPEAN PATENT APPLICATION

(21) Application number: **89306648.0**

(22) Date of filing: **30.06.89**

(51) Int. Cl.⁴: **C03B 37/00**

The title of the invention has been amended (Guidelines for Examination in the EPO, A-III, 7.3).

(30) Priority: **05.07.88 GB 8815966**

(43) Date of publication of application:
**07.02.90 Bulletin 90/06**

(84) Designated Contracting States:
**DE FR IT NL SE**

(71) Applicant: **GEC-Marconi Limited**
**The Grove Warren Lane**
**Stanmore Middlesex HA7 4LY(GB)**

(72) Inventor: **Gratze, Stephen Cecil**
**27 Church Road**
**Boreham Essex(GB)**

(74) Representative: **Loven, Keith James et al**
**GEC plc Patent Dept.(Chelmsford Office)**
**GEC-Marconi Research Centre West**
**Hanningfield Road**
**Great Baddow Essex CM2 8HN(GB)**

(54) **Method of manufacturing optical elements.**

(57) Optical elements, particularly holographic elements, are formed by infiltrating into a body of porous sol gel glass a material which can be optically activated. The material is activated in accordance with a predetermined pattern, e.g. by standard holographic techniques or by laser beam writing techniques, to confer upon it the desired optical characteristics, e.g. filter, mirror or lens.

EP 0 353 864 A2

## OPTICAL ELEMENTS

This invention relates to a method of forming an optical element, for example an optical waveguide or a holographic mirror, lens or filter.

Typically, such elements are produced by materials having a gelatine or synthetic polymer matrix. Optical elements produced from such materials are insufficiently durable for some applications, and for other applications may lack sufficient dimensional stability.

It has now been found that, by using a porous glass as the matrix, optical elements may be produced which are comparable with conventional glass optical elements for durability and stability.

Accordingly, the invention provides a method of forming an optical element, comprising forming a body of a porous transparent material, infiltrating into the pores in the body a material which can be optically activated, and optically activating the material in accordance with a predetermined pattern, thereby conferring on the element desired optical characteristics.

Preferably, the porous material is a glass, for example of the type formed by casting a liquid silica gel and heat treating the cast material to form a transparent microporous silica body. Materials of this type are known as sol-gel materials.

Sol gel processes have been developed for producing high performance materials and components from many materials and for a wide range of applications. More recently, the process has been successfully employed to produce silica components of high optical quality. In the process from the initial liquid components to final silica block or device the material passes through a number of steps: gel formation, casting, aging of the soft gel, initial bake out schedules (typically with temperature rising to 800°C) and final densification to produce a material very like very high quality fused silica. Optical materials based on compounds other than silica might also be produced this way.

Of primary interest here is the material which has undergone initial temperature treatment, say up to 800°C. This highly uniform, transparent solid, consisting of pure silica, is highly porous with typically 30% of the volume being voids. These voids are extremely small and evenly distributed, the mean void size being in the range 1 to 10 nm, depending on the process schedule. Liquids can be readily infiltrated into such materials.

The material infiltrated into the porous body is preferably a material which undergoes a change in refractive index on optical activation, although the absorption of the material may change as an alternative, or additionally. The change in index might be to the higher order coefficients which control the electro-optic and non-linear properties of the material.

Alternatively, the optical activation process may induce chemical or physical changes which aid retention of the infiltrated material in the pores, e.g. by forming molecular or other bonds to the pore walls, by changing the material from a form soluble in a "developer" used in a subsequent development process, or by causing the material to solidify, the unchanged material being removed from the body, e.g. by vacuum extraction techniques.

Subsequent further processing may be employed to fix or stabilise the patterned material, although for many applications it is expected that surface sealing of the silica will be adequate. Final firing typically causes uniform shrinkage of the matrix and could be controlled to finely "tune" the spacing of the optically written features (for refractory materials) although it is expected that the change in optical path lengths will be relatively small.

A wide range of optically activated (photosensitive) materials can be used in the present invention and, where necessary, development and stabilisation processes.

Activating exposure of the optically activatable material may conveniently be carried out using holographic techniques, or by focused beam writing. The term "optical activation" is used herein to include not only activation by visible radiation, but also activation by radiation of wavelengths longer and shorter than the visible wavelengths.

Optical elements produced by the method of the invention include holographic mirrors, lens and filters, optical waveguides and three-dimensional arrays of dots or other shapes. Modification of higher order coefficients could make the structures switchable by an applied electric field or have selected non-linear optical properties. Control electrode structures might therefore need to be incorporated in the elements. This could be achieved by a similar process, by which electrically conductive materials are infiltrated into pores from which the first optically activatable material has been removed, and then causing the material to become fixed in the pores according to a predetermined pattern. This would typically also involve optical activation, possibly in accordance with a mask pattern.

Graded index components may conveniently be produced by the method of the invention, and such components may also be shaped, for example a spherical lens with graded index surfaces may be produced. Arrays of graded index components may be produced using the method of the invention. The natural beam profile of a writing laser may be used in producing a suitable index profile for a graded index lens.

The following example illustrates a method in accordance with a preferred embodiment of the invention.

## EXAMPLE

A holographic narrow band optical filter is produced as follows. A silica sol gel glass plate is prepared by forming a silica sol and destabilising the sol to form a silica gel, in the manner described by Zarzycki, J., in "Processing of Gell Glasses", Glass: Science and Technology Vol. 2, p214, Academic Press, Inc., 1984. The gel is cast to form a plate, and the cast plate is then subjected to controlled drying, followed by heat treatment to a maximum temperature of about 800°C. This yields a highly uniform, transparent pure silica body containing about 30% by volume of micropores whose mean size is in the range 1 to 10 nm. A solution of a transparent light-polymerisable organic monomer, such as methyl methacrylate sensitised with benzoin methyl ether, is then infiltrated into the plate by soaking it in the solution overnight at room temperature.

The plate is then exposed using laser light in conventional manner to produce a planar holographic fringe pattern throughout the matrix by local polymerisation of the exposed monomer. The unexposed monomer is then removed from the plate by vaccum extraction and heating. The changes in refractive index between the portions of the plate where the pores are filled with polymer, and those portions where the pores contain only air, yield a phase hologram which acts as a narrow band filter.

It will be appreciated that the monomer may undergo a change of refractive index upon polymerisation, and it may therefore be unnecessary with some materials to remove the unexposed monomer from the pores; the surface may simply be sealed to retain it.

A further possibility is the removal of unexposed monomer and its replacement with a material having a different refractive index. This material may also be a monomer polymerisable by exposing the whole plate to light.

An aligned electro-optic polymer may be produced in the pores by using anistropic pores (i.e. pores with aligned or partially aligned major or minor axes) and surface effects, or by polymerising with a d.c. electric filed applied to the block, or by a combination of these techniques. Application of an electric field would then change the refractive index of the patterned region, giving a switchable or tunable filter. Alternatively, the fringe pattern might be used for phase matching in optical harmonic generation or for wave mixing applications.

Materials such as Nd or rhodamine may be incorporated into the original porous glass matrix or into the infiltrant to yield a laser material in which the fringes formed in the material would form a distributed feedback arrangement giving single cavity mode emission.

An alternative approach to making some or all of the above components is to infiltrate organic or inorganic materials such as are used in photography (classically Ag compounds but other might be used). Exposure occurs, sensitising the desired pattern which is subsequently developed and fixed. Bleaching processes may be used to give a phase (index) rather than an amplitude (absorption) modulation in analogy with known photographic processes. In a further step, after removal of all unexpected metal, any remaining organic materials would be baked out, the metal oxidised and then final high temperature firing (c. 1150°C) carried out. The result is an extremely stable, rugged and optically workable silica block or device containing the index gratings conferred by the high index metallic oxide. Silver might be particularly suitable for the process since many photographic preparations are known and presence of its oxide would substantially increase the index of silica.

## Claims

1. A method of forming an optical element, comprising forming a body of a porous transparent material, infiltrating into the pores in the body a material which can be optically activated, and optically activating the material in accordance with a predetermined pattern, thereby conferring on the element desired optical characteristics.

2. A method according to Claim 1, wherein the porous material is a sol gel material.

3. A method according to Claim 2, wherein the body of porous material is formed by casting a liquid silica gel and heat treating the cast material to form a transparent microporous silica body.

4. A method according to Claim 1, 2 or 3, wherein the porous material is formed with a mean pore size of 1 to 10 nm.

5. A method according to any preceding claim, wherein the material infiltrated into the body is a material which undergoes a change of refractive index on optical activation.

6. A method according to Claim 5, wherein the material is such as to be rendered electro-optic on optical activation.

7. A method according to Claim 5, wherein the material is such as to exhibit non-linear optical properties on optical activation.

8. A method according to any preceding claim, wherein optical activation is carried out by holographic techniques.

9. A method according to any of Claims 1 to 7, wherein optical activation is carried out by exposure to a controlled focused beam of light.

10. A method according to Claim 6 or 7, which also comprises forming on or in the element control electrode structures whereby an electric field may be applied to the material.